Europäisches Patentamt

European Patent Office

Office européen des brevets

(19)

(11) Numéro de publication : **0 098 190**
**B1**

(12)

# FASCICULE DE BREVET EUROPÉEN

(45) Date de publication du fascicule du brevet :
09.09.87

(51) Int. Cl.⁴ : **G 02 B   6/38**

(21) Numéro de dépôt : **83401191.8**

(22) Date de dépôt : **10.06.83**

(54) Dispositif de connexion et d'alignement de deux embouts de raccordement de fibres optiques en forme de V.

(30) Priorité : 22.06.82 FR 8210905

(43) Date de publication de la demande :
11.01.84 Bulletin 84/02

(45) Mention de la délivrance du brevet :
09.09.87 Bulletin 87/37

(84) Etats contractants désignés :
DE GB IT

(56) Documents cités :
EP-A- 0 001 117
EP-A- 0 045 271
FR-A- 2 367 297
FR-A- 2 385 110
FR-A- 2 485 754
GB-A- 2 022 284
GB-A- 2 054 893
GB-A- 2 057 158
US-A- 4 181 400
US-A- 4 193 664
L'ONDE ELECTRIQUE, vol. 61, no. 10, octobre 1981,
pages 20-21, Paris, FR. J.J. DUMONT: "Les connecteurs Souriau série S 1006 à faible perte d'insertion
(0,5dB) pour application Télécom"

(73) Titulaire : **SOCAPEX**
**10 bis, quai Léon Blum**
**F-92153 Suresnes (FR)**

(72) Inventeur : **Parchet, Pierre**
**THOMSON-CSF SCPI 173, bld Haussmann**
**F-75379 Paris Cedex 08 (FR)**
Inventeur : **Baraka, Joelle**
**THOMSON-CSF SCPI 173, bld Haussmann**
**F-75379 Paris Cedex 08 (FR)**

(74) Mandataire : **Brullé, Jean et al**
**Service Brevets Bendix 44, rue François 1er**
**F-75008 Paris (FR)**

## Description

La présente invention concerne un dispositif de connexion et d'alignement de deux embouts de raccordement de fibres optiques, chaque embout de raccordement contenant une fibre optique solidaire de celui-ci et débouchant sur sa face antérieure, la section de chaque embout de raccordement comportant une partie en forme de V.

Les embouts de raccordement de fibres optiques décrit ci-dessus sont généralement connus sous le nom d'embouts en V. Ils ont une forme extérieure sensiblement cylindrique sur laquelle ont été réalisés deux plans de référence orthogonaux leur conférant une section en forme de V. L'alignement de deux embouts de fibres optiques de ce type consiste à positionner très exactement ces plans de référence par rapport à deux plans correspondant d'un manchon d'alignement, chaque fibre étant elle-même précisément repérée par rapport aux deux plans de l'embout : pour plus de détails sur cette technique, on pourra se reporter par exemple aux brevets américains 4 019 806 et 4 160 580. Toutefois, de tels embouts de raccordement en forme de V présentent plusieurs inconvénients : le manchon d'alignement de deux embouts doit être usiné de manière extrèmement précise et la section de l'embout doit être identique, au jeu près, à celle du manchon d'alignement. De plus, l'absence de symétrie d'un tel embout nécessite l'utilisation d'embouts gauche et droit avec tous les inconvénients que cela implique. L'utilisation d'un V d'alignement et de vis de serrage des embouts dans ce V comme dans le brevet américain 4 019 806 nécessite l'utilisation de pièces métalliques de grande rigidité pour la réalisation du V du manchon d'alignement afin d'éviter les variations de l'angle entre les parois du V au cours du serrage.

On connaît aussi, notamment par le brevet français 2 485 754, un dispositif de connexion et d'alignement d'embouts pour connecteur de fibres optiques. Ce dispositif comporte une embase (ou corps de raccord) dans laquelle est placé un manchon d'alignement de section comportant une gorge en forme de V destinée à coopérer avec la partie en forme de V de chaque embout de raccordement, les extrémités des branches de la gorge en forme de V étant reliées entre elles de manière à ménager une cavité de forme sensiblement complémentaire à celle de l'embout correspondant, des moyens élastiques sous forme de pions de maintien étant disposés dans le manchon d'alignement, sensiblement au-dessus du fond de la gorge en forme de V de manière à plaquer chaque embout de raccordement au fond de la gorge du manchon d'alignement.

La présente invention concerne un dispositif de connexion et d'alignement de deux embouts de raccordement de fibres optiques du type ci-dessus.

Conformément à la présente invention, les moyens élastiques sont constitués par une languette élastique recourbée aux deux extrémités pour avoir deux bras élastiques indépendants, le manchon d'alignement comportant au moins une ouverture sur les rebords de laquelle vient s'appuyer la languette, une partie au moins de chaque bras débouchant à l'intérieur du manchon d'alignement et venant s'appuyer directement ou par l'intermédiaire d'un bossage sur l'embout de manière à plaquer celui-ci dans la rainure en V du manchon d'alignement. De plus, l'embase comporte une rainure au-dessus du fond de la gorge en V du manchon d'alignement et de largeur correspondant sensiblement à la largeur de la languette élastique dans laquelle celle-ci vient se loger au cours du montage du dispositif de connexion et d'alignement.

Par conséquent, il suffit de soigner les tolérances de l'angle entre les plans formant le V de l'embout de raccordement d'une part et du manchon d'alignement d'autre part de manière à ce que ceux-ci soient identiques, pour obtenir de bons résultats. Les autres cotes du manchon et de l'embout peuvent être réalisées avec des tolérances beaucoup plus grandes. En effet, la languette élastique plaque chaque embout contre les parois correspondantes de la gorge en forme de V du manchon permettant un alignement rigoureux des fibres optiques lorsque celles-ci sont correctement positionnées par rapport au plan de repérage en V des embouts. Bien entendu, ceux-ci doivent posséder une bonne planéité également pour ne pas introduire de jeux entre eux lors de l'accouplement. D'autre part, avec la forme particulière de l'embase, on réalise un prépositionnement du manchon d'alignement dans l'embase du fait de la pénétration de la languette dans la rainure de l'embase.

Pour faciliter l'introduction de chaque embout dans le manchon d'alignement, le corps de fiche dans lequel l'embout est fixé comportera de préférence des moyens de détrompage permettant également le guidage dudit embout. Ces moyens de détrompage seront constitués par un ensemble de rainures complémentaires au jeu près sensiblement parallèles à l'axe de la fibre, de largeurs différentes pour réaliser le détrompage, réparties sur l'embase et le corps de fiche.

Le blocage en rotation et en translation, de manière à rendre le dispositif selon l'invention sensiblement symétrique par rapport à un plan perpendiculaire à l'axe du manchon est réalisé à l'aide d'une vis ou de colle rendant solidaire ledit manchon de l'embase, évitant un jeu sous la rainure préjudiciable à l'alignement des fibres entre manchon et corps d'embase, en positionnant les parois du V de manière précise par rapport au corps de l'embase.

L'invention sera mieux comprise à l'aide des exemples de réalisation suivants donnés conjointement avec les figures qui représentent :

la figure 1, une vue des différentes parties constituant le dispositif de connexion et d'alignement selon l'invention ;

la figure 2, une vue d'ensemble d'une fiche de connexion venant s'enficher dans le dispositif de la figure 1 ;

la figure 3, une vue en coupe de la languette élastique du dispositif de la figure 1 ;

la figure 4, une vue en coupe du manchon d'alignement du dispositif de la figure 1 ;

la figure 5, une vue en coupe longitudinale du dispositif monté selon l'invention ;

la figure 6, une vue en coupe transversale du dispositif de la figure 5 ;

la figure 7, une vue éclatée de la fiche de la figure 2.

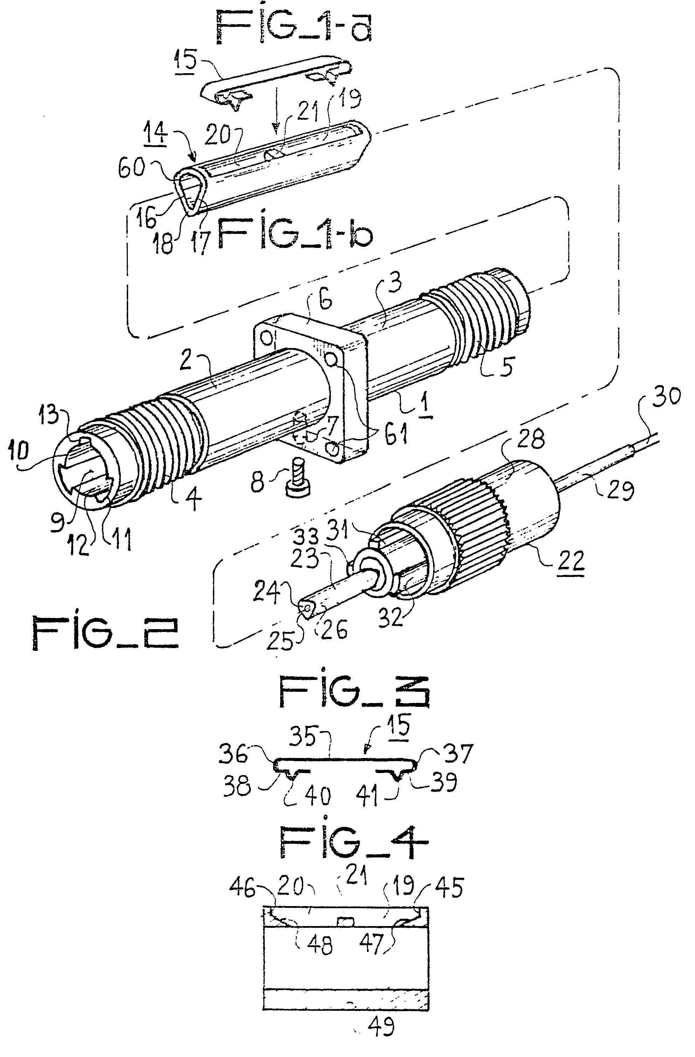

Sur la figure 1, est représentée une vue des différentes parties constituant le dispositif de connexion et d'alignement selon l'invention. Sur la figure 1a, sont représentés le manchon d'alignement et la languette élastique coopérant avec ce manchon. Le manchon d'alignement 14 a une section en forme de V constituée par les deux parois 16 et 17, réunies entre elles par une paroi semi-cylindrique 60. Cette paroi a essentiellement pour fonction de rigidifier le manchon et éviter les déformations du V. Sur sa partie supérieure, sensiblement au-dessus du fond de la rainure 18 de la gorge en V, se trouvent deux ouvertures 19 et 20 séparées entre elles par une petite languette 21. Cette languette permet de donner plus de rigidité au manchon d'alignement 14, de sorte que la paroi semi-cylindrique 60 maintient toujours efficacement les deux parois en V 16 et 17 sans modification de l'angle entre lesdites parois au cours des manipulations auxquelles le manchon d'alignement est soumis. Une languette élastique 15 vient se loger dans les ouvertures 19 et 20 et coopérer avec le manchon d'alignement et l'embase 1 d'une manière qui sera décrite plus en détail ci-après.

La figure 1b représente une vue de l'embase du dispositif de connexion et d'alignement selon l'invention. Cette embase 1 comporte essentiellement un corps extérieurement cylindrique 2, 3 séparé par une collerette 6 munie d'ouvertures de fixation 61. L'embase 1 possède au niveau de la collerette 6 un trou 7 débouchant à l'intérieur de la cavité cylindrique de l'embase permettant le passage d'une vis 8 pour la fixation du manchon d'alignement 14 ainsi qu'on le verra dans la suite de la description.

L'embase 1 possède une cavité interne de forme sensiblement cylindrique munie de rainures de guidage et détrompage 9, 11, 13. Ces rainures sont situées parallèlement à l'axe de l'embase cylindrique 1 et sont de largeurs différentes et de positions angulaires relatives bien précises de manière à permettre le raccordement sans difficulté de la fiche 22.

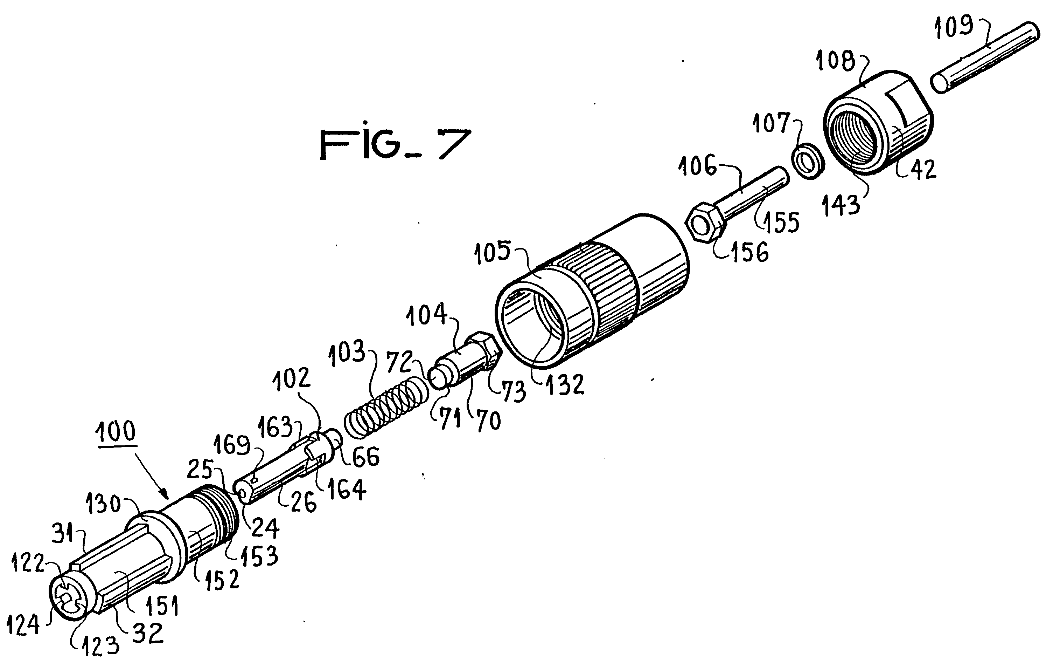

Cette fiche 22 représentée schématiquement sur la figure 2, comporte un embout 23 à l'extrémité antérieure duquel débouche une fibre optique 24, ledit embout de forme sensiblement complémentaire à la forme intérieure du manchon d'alignement 14, ayant une section comportant un V défini par les plans 25 et 26. Cette fiche qui sera décrite plus en détail à la figure 7, comporte des moyens de détrompage 31, 32 et 33 complémentaires de ceux 9, 11, 13 de l'embase, permettant ainsi le préguidage de la fiche lors de l'accouplement avec le dispositif selon l'invention et le détrompage du connecteur ainsi formé de manière à amener sensiblement l'un en face de l'autre le V de l'embout 25, 26 et le V du manchon d'alignement 16, 17. La fiche 22 comporte une bague de verrouillage 28 munie d'un filetage coopérant avec les filetages 4 et 5 de l'embase 1. Le corps de fiche est raccordé au câble optique 30 par l'intermédiaire d'une canule 29.

La figure 3 représente une coupe longitudinale de la languette élastique 15 de la figure 1a. Cette languette élastique comporte une partie plane 35 recourbée à ses deux extrémités 36 et 37 donnant naissance à deux bras 38 et 39 munis respectivement d'un bossage 40 et 41. Ces deux bras, compte tenu de la structure de la languette, comportent donc une élasticité par rapport à la partie plane 35.

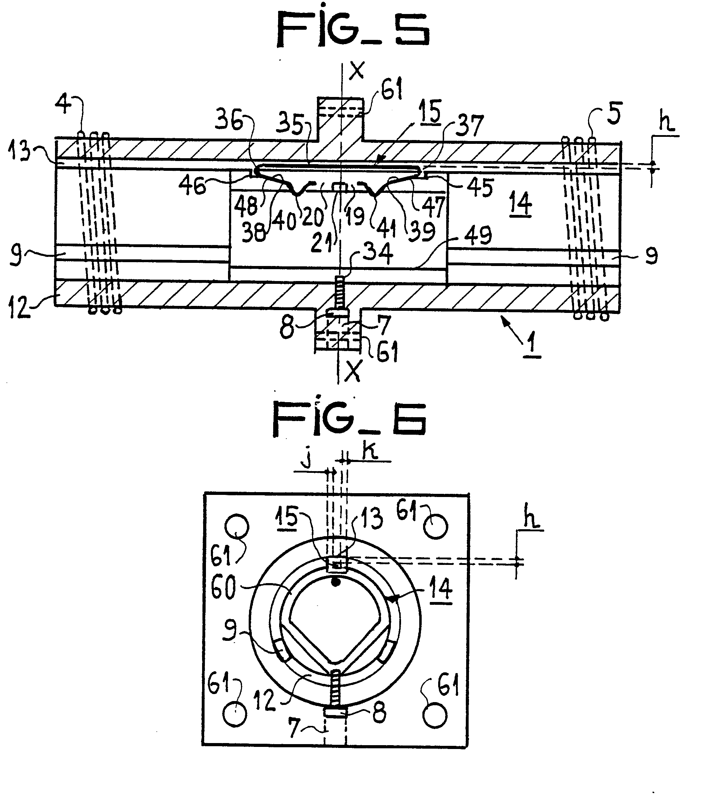

La figure 4 représente une coupe longitudinale selon un plan radial du manchon d'alignement 14, au niveau des ouvertures 19 et 20. Celles-ci se terminent à chaque extrémité du manchon 14 par une partie verticale 45, 46 se prolongeant par une rampe inclinée 47, 48 sur laquelle viennent reposer les extrémités 36 et 37 de la languette 15. On notera l'extrémité 34 du trou de fixation de la vis 8 se trouvant sensiblement au milieu de la paroi 49 du manchon 14 d'une part et au droit du fond de la rainure en V d'autre part.

La figure 5 représente une vue en coupe longitudinale du dispositif selon l'invention lorsque les différentes parties le constituant ont été montées l'une dans l'autre. Sur cette figure, les mêmes éléments que ceux des figures précédentes portent les mêmes références. Sur cette figure, il est particulièrement intéressant de noter la position de la languette élastique 15. Cette languette est maintenue par les rebords latéraux de la rainure 13 (voir figure 6). Le manchon 14 étant rendu solidaire de l'embase 1 par la vis de fixation 8, la languette 15 est maintenue longitudinalement dans la rainure 13 par les rebords 45 et 46 avec un certain jeu, facilitant le montage, mais limité pour maintenir la symétrie de l'ensemble par rapport à l'axe XX. Les bras 38 et 39 reposent ici respectivement sur les rebords inclinés 48 et 47. Les bossages 40 et 41, après montage, débouchent bien entendu dans le canal intérieur du manchon d'alignement 14. On notera également le jeu h entre la partie plate 35 de la languette élastique 15 et le fond de la rainure 13 en l'absence d'embouts de raccordement. Lors de l'introduction de ceux-ci, le bras 35 de la languette 15 est plaqué au fond de la rainure 13, la forme des bossages et l'inclinaison des bras 38 et 39 par rapport à la partie plane 35 devant être suffisantes pour permettre à la languette 15 d'assurer sa fonction de plaquage de l'embout en V 23 au fond de la rainure délimitée par les plans 16 et 17. On notera également que la fixation du manchon d'alignement 14 au corps de l'embase 1 à l'aide de la vis 8 située sensiblement au droit du fond 18 de la rainure en V (voir figure 6), cette vis permettant de plaquer la partie inférieure de ce manchon sur la partie correspondante 12 de l'embase 1. Ceci évite un jeu selon l'axe XX du manchon 14 rigidement maintenu à l'intérieur de l'embase 1, jeu qui pourrait être préjudiciable à l'alignement des embouts 23. D'une manière générale en effet, la solidarisation du manchon et de l'embase est réalisée sous la rainure en V du manchon d'alignement dont l'épaisseur à cet endroit-là est bien calibrée, en réalisant un contact intime entre l'enveloppe extérieure du manchon et l'enveloppe intérieure de l'embase, sensiblement tout au long de la génératrice de contact.

L'épaisseur calibrée des parois du manchon d'alignement s'obtient en pratique en plaçant les parois internes de celui-ci à une distance très précise de l'enveloppe cylindrique extérieure de ce manchon. Lorsqu'on moule ce manchon, il est généralement nécessaire de prévoir des parois d'épaisseurs sensiblement constantes au niveau du V (voir figure 6) pour obtenir une bonne planéité.

La figure 6 représente une coupe selon l'axe XX du manchon selon l'invention représentée sur la figure 5. Sur cette figure, qui porte les mêmes références que celles des figures précédentes pour désigner les mêmes éléments, on remarquera en particulier le jeu latéral j, k de la languette élastique 15 dans la rainure de guidage et détrompage 13, permettant en particulier un auto-centrage de cette languette 15 par rapport à la face semi-circulaire de l'embout après introduction de celui-ci dans le manchon 14. Cet auto-centrage assure une symétrie des forces appliquées sur chacun des embouts. Ces jeux latéraux j, k et h permettent de plus une introduction aisée du manchon d'alignement muni de sa languette élastique 15 à l'intérieur de l'embase lors du montage du dispositif selon l'invention avant solidarisation par la vis 8. Lorsque le manchon 14 est en matière plastique moulée, il convient de ne pas trop serrer la vis 8 pour éviter le cambrage du manchon autour du point 34. La vis 8 est alors bloquée par une coulée de résine durcissable dans le trou 7.

La simplicité de structure du manchon d'alignement et de l'embase tels qu'illustrés sur les figures 1 à 6 permet de réaliser simplement ces pièces en matière plastique par moulage, malgré la précision requise pour l'alignement des fibres optiques. Les matières thermo-plastiques courantes pour le moulage tels que les polyamides, polycarbonates, polysulfones, etc... conviennent bien pour ces réalisations. La languette élastique dans le présent exemple de réalisation exposé ci-dessus est faite à partir d'un ruban plat de métal.

On notera également que la vis 8 peut être remplacée par une goupille en matière plastique coulée dans les trous 7 et 34.

La figure 7 représente une vue éclatée de la fiche représentée schématiquement sur la figure 2. Sur cette figure, les mêmes éléments que ceux des figures précédentes portent les mêmes références. Elle comporte un corps de fiche 100 de forme sensiblement cylindrique muni sur sa partie extérieure frontale de rainures 31, 32 de détrompage. Ces rainures sont limitées par une collerette cylindrique 130. Sur la partie avant du corps de fiche, à l'intérieur de celui-ci, se trouvent des clés de détrompage 122, 123 et 124 qui coopèrent respectivement avec les clés de détrompage correspondantes de l'embout 102, 163, 164. Le coulissement axial de ces clés de détrompage est limité pour l'embout par le fond des rainures qui viennent buter contre les clés 122, 123 et 124 tandis que le déplacement axial dans l'autre sens est limité par le limiteur 104 coopérant avec le ressort 103 exerçant une force (sur la gauche sur la figure) sur l'embout de manière à l'amener au contact de l'autre embout après connexion dans le manchon d'alignement décrit ci-dessus. La gaine du câble à fibre optique est maintenue par sertissage grâce à une ferrule 106, une canule 109 et une rondelle 107. La ferrule 106 présente à sa partie avant une collerette 156 à six pans. Le limiteur 104 à travers lequel passe la fibre optique présente à sa partie avant un logement 71 pour le ressort 103 et à sa partie arrière une collerette 73 à n pans (ici n = 6). Une bague de verrouillage 105 pourvue d'une collerette intérieure destinée à venir en appui sur la collerette 130 du corps de fiche est destinée à être vissée sur le raccord par son filetage 132 de telle sorte que le corps de fiche soit verrouillé rapidement sur le raccord. Le montage de la fiche réalisé grâce à un écrou arrière 108 associé à une rondelle 107 lui assurant une meilleure portée, ledit écrou présentant un filetage 143 venant se visser dans un filetage 153 correspondant de la partie arrière du corps de fiche, ledit écrou maintenant en position le limiteur 104 et la ferrule 106 dans un logement à n pans (ici n = 6) disposé à l'arrière du corps de fiche 100, l'embout 102 étant maintenu en position de manière flottante par le ressort 103. La bague de verrouillage 105 est susceptible d'un débattement longitudinal entre la collerette 130 et la partie avant de l'écrou arrière 108.

La fiche après assemblage comporte donc un corps de fiche et un embout flottant présentant un degré de liberté longitudinal grâce au rappel du ressort 103, un degré de liberté en rotation autour de son axe du fait du jeu existant entre les clés de détrompage 122, 123, 124 et les rainures correspondantes 163, 164. L'embout possède également un degré de liberté parallèlement à son axe et une liberté de rotation sensiblement autour de son extrémité arrière grâce au jeu mécanique existant d'une part entre le diamètre extérieur de la collerette de l'embout 102 et le diamètre intérieur de la partie cylindrique avant du corps de fiche 100, et d'autre part entre le diamètre délimitant le fond des rainures 163 et 164 de l'embout 102 et le diamètre intérieur dans lequel s'inscrivent les clés de verrouillage 122, 123 et 124.

**Revendications**

1. Dispositif de connexion et d'alignement de deux embouts de raccordements de fibres optiques, chaque embout de raccordement contenant une fibre solidaire de celui-ci et débouchant sur sa face antérieure, la section de chaque embout de raccordement comportant une partie en forme de V, ledit dispositif comportant une embase (1) dans laquelle est placé un manchon d'alignement (14) de section comportant une gorge en forme de V (16, 17) destinée à coopérer avec la partie en forme de V (25, 26) de chaque embout de raccordement (23), les extrémités des branches de la gorge en forme de V (16, 17) étant reliées entre elles de manière à ménager une cavité (16, 17, 60) de forme sensiblement complémentaire à celle de l'embout (23) correspondant, des moyens élastiques (15) étant disposés dans le manchon d'alignement (14), sensiblement au-dessus du fond (18) de la gorge (16, 17) en forme de V, de manière à plaquer chaque embout de raccordement (23) au fond (18) de la gorge (16, 17) du manchon d'alignement (14), caractérisé en ce que les moyens élastiques sont constitués par une languette élastique (15) recourbée aux deux extrémités pour avoir deux bras (38, 39) élastiques indépendants, le manchon d'alignement comportant au moins une ouverture (19, 20) sur les rebords de laquelle vient s'appuyer la languette, une partie au moins de chaque bras débouchant à l'intérieur du manchon d'alignement (14) et venant s'appuyer directement ou par l'intermédiaire d'un bossage sur l'embout (23) de manière à plaquer celui-ci dans la rainure (16, 17) en V du manchon d'alignement et en ce que l'embase comporte une rainure au-dessus du fond (18) de la gorge en V du manchon d'alignement (14) et de largeur correspondant sensiblement à la largeur de la languette élastique (15) dans laquelle (13) celle-ci vient se loger au cours du montage du dispositif de connexion et d'alignement.

2. Dispositif selon la revendication 1, caractérisé en ce que l'embase (1) comporte une pluralité de rainures (9, 11, 13) destinées à réaliser le détrompage et le guidage du corps de fiche (22) muni de son embout (23) dans l'embase.

3. Dispositif selon la revendication 1, caractérisé en ce que la rainure (13) au-dessus du fond de la gorge en V a des dimensions telles qu'elle permet un jeu radial (4) et tangentiel (j, k) de la languette (15) dans la rainure (13).

4. Dispositif selon l'une des revendications 1 à 3, caractérisé en ce que le manchon d'alignement (14) est rendu solidaire de l'embase (1) par un moyen de fixation.

5. Dispositif selon la revendication 4, caractérisé en ce que la solidarisation du manchon et de l'embase est réalisée sous la rainure en V du manchon d'alignement (14), dont l'épaisseur à cet endroit est bien calibrée, avec un contact intime entre l'enveloppe extérieure du manchon (14) et l'enveloppe intérieure (12) de l'embase (1) sensiblement tout au long de la génératrice de contact.

6. Dispositif selon l'une des revendications 4 et 5, caractérisé en ce que la solidarisation est assurée par une vis (8) qui traverse l'embase (1) et vient se loger sous le manchon d'alignement (14) et environ au milieu de celle-ci de manière à plaquer ledit manchon (14) d'alignement contre l'enveloppe intérieure de l'embase (1).

**Claims**

1. Device for connecting and aligning two optical fiber connector pieces, each connector piece including a fiber fixed thereto and ending at its front face, the cross-section of each connector piece comprising a V-shaped portion, said device comprising a socket (1) receiving an aligning sleeve (14) of a cross-section including a V-shaped channel (16, 17) intended to cooperate with the V-shaped portion (25, 26) of each connector piece (23), the ends of the legs of the V-shaped channel (16, 17) being connected to each other such as to provide a cavity (16, 17, 60) of a form substantially complementary to that of the corresponding connector piece (23), resilient means (15) being disposed in the aligning sleeve (14) substantially above the bottom (16) of the V-shaped channel (16, 17) such as to urge each connector piece (23) against the bottom (16) of the channel (16, 17) of the aligning sleeve (14), characterized in that the resilient means are comprised of a resilient leaf (15) rebent at its two ends so as to have two independent resilient arms (38, 39), the aligning sleeve comprising at least one opening (19, 20) the edges of which are engaged by the leaf, at least a portion of each arm extending into the interior of the aligning sleeve (14) and engaging the connector piece (23) directly or through a projection such as to urge the latter into the V-shaped channel (16, 17) of the aligning sleeve, and in that the socket comprises a groove above the bottom (16) of the V-shaped channel of the aligning sleeve (14) and of a width substantially corresponding to the width of the resilient sleeve (15), the latter being arranged in said groove (13) during mounting of the connecting and aligning device.

2. Device according to claim 1, characterized in that the socket (1) comprises a plurality of grooves (9, 11, 13) adapted to position and guide the plug body (22) provided with its connector piece (23), within the socket.

3. Device according to claim 1, characterized in that the groove (19) above the bottom of the V-shaped channel has such dimensions that it allows for a radial (4) and tengential (j, k) play of the leaf (15) in the groove (13).

4. Device according to any of claims 1 to 3, characterized in that the aligning sleeve (14) is fixedly connected to the socket (1) by securing means.

5. Device according to claim 4, characterized in that the fixation of the sleeve and the socket is obtained below the V-shaped groove of the aligning sleeve (14) whose thickness at this area is well calibrated, by an intimate contact between the external surface of the sleeve (14) and the internal surface (12) of the socket (1) along substantially the whole contact line.

6. Device according to any of claims 4 and 5, characterized in that the fixation is obtained by a screw (8) traversing the socket (1) and being disposed below the aligning sleeve (14) and about the middle thereof such as to urge said aligning sleeve (14) against the internal surface of the socket (1).

**Patentansprüche**

1. Vorrichtung zum Verbinden und Ausrichten zweier Lichtleiter-Anschlußteile, die jeweils eine Faser enthalten, welche mit ihnen fest verbunden ist und an ihrer vorderen Stirnseite mündet, wobei der Querschnitt jedes Anschlußteiles einen V-förmigen Abschnitt aufweist, mit einem Sockel (1), in dem eine Zentrierhülse (14) angeordnet ist, die einen Querschnitt in Form einer V-förmigen Rille (16, 17) besitzt, welche mit dem V-förmigen Abschnitt (25, 26) jedes Anschlußteiles (22) zusammenwirkt, wobei die Enden der Schenkel der V-förmigen Rille (16, 17) untereinander so verbunden sind, daß ein Hohlraum (16, 17, 60) gebildet wird, dessen Form im wesentlichen komplementär zu der des entsprechenden Anschlußteiles (23) ist, wobei elastische Mittel (15) in der Zentrierhülse (14) praktisch oberhalb des Bodens (18) der V-förmigen Rille (16, 17) so angeordnet sind, daß jedes Anschlußteil (23) gegen den Boden (18) der Rille (16, 17) der Zentrierhülse (14) gedrückt wird, dadurch gekennzeichnet, daß die elastischen Mittel aus einem elastischen Blattfederteil (15) bestehen, das an seinen beiden Enden umgebogen ist, so daß es zwei unabhängige elastische Arme (38, 39) besitzt, wobei die Zentrierhülse mindestens eine Öffnung (19, 20) aufweist, an deren Rändern das Blattfederteil anliegt, wobei zumindest ein Teil jedes Armes sich in das Innere der Zentrierhülse (14) erstreckt und unmittelbar oder indirekt über einen Ansatz an dem Anschlußteil (23) so anliegt, daß dieses in die V-förmige Rille (16, 17) der Zentrierhülse gedrückt wird, und daß der Sockel eine Nut oberhalb des Bodens (18) der V-förmigen Rille der Zentrierhülse (14) aufweist, deren Breite im wesentlichen der Breite des Blattfederteiles (15) entspricht und in welcher (13) dieses im Verlauf der Montage der Vorrichtung zum Verbinden und Ausrichten angeordnet wird.

2. Vorrichtung nach Anspruch 1, dadurch gekennzeichnet, daß der Sockel (1) mehrere Nuten (9, 11, 13) aufweist, die zur Positionierung und Führung des mit seinem Anschlußteil (23) versehenen Steckerteil in dem Sockel dienen.

3. Vorrichtung nach Anspruch 1, dadurch gekennzeichnet, daß die Nut (13) oberhalb des Bodens der V-förmigen Rille solche Abmessungen hat, daß das Blattfederteil (15) ein radiales (4) und tangentiales (j, k) Spiel in der Nut (13) erhält.

4. Vorrichtung nach einem der Ansprüche 1-3, dadurch gekennzeichnet, daß die Zentrierhülse (14) mit dem Sockel (1) durch ein Befestigungsmittel fest verbunden ist.

5. Vorrichtung nach Anspruch 4, dadurch gekennzeichnet, daß die feste Verbindung zwischen Zentrierhülse und Sockel unterhalb der V-förmigen Rille der Zentrierhülse (14), deren Dicke an dieser Stelle genau dimensioniert ist, mit inniger Berührung zwischen der Außenfläche der Zentrierhülse (14) und der Innenfläche (12) des Sockels (1) im wesentliche entlang der gesamten Berührungslinie erfolgt.

6. Vorrichtung nach einem der Ansprüche 4 und 5, dadurch gekennzeichnet, daß die Verbindung durch eine Schraube (8) erfolgt, die sich durch den Sockel (1) erstreckt und unterhalb der Zentrierhülse (14) sowie ungefähr in deren Mitte so angeordnet ist, daß die Zentrierhülse (14) gegen die Innenfläche des Sockels (1) angedrückt wird.

FIG_1-a

FIG_1-b

FIG_2

FIG_3

FIG_4

## FIG_5

## FIG_6

FIG_7

0 098 190